# EUROPÄISCHE PATENTANMELDUNG

(11) **EP 1 925 572 A1**
(43) Veröffentlichungstag der Anmeldung: **28.05.2008**
(21) Anmeldenummer: 07405259.8
(22) Anmeldetag: 30.08.2007
(51) Int. Cl.: B65G 1/04

(54) **Regallageranlage**

(30) Priorität: 22.11.2006 CH 18772006
(71) Anmelder: Dreier Solutions GmbH, 4245 Kleinlützel (CH)
(72) Erfinder: Dreier, Erich, 4245 Kleinlützel (CH)
(74) Vertreter: Rottmann, Maximilian

(57) **Zusammenfassung**

Die Regallageranlage zur Aufnahme von Gütern ist mit zumindest einem flurfrei arbeitenden Regalbediengerät (6) versehen. Das jeweilige Regalbediengerät (6) verfügt über eine Verfahreinheit (7) und ein über Seile (9) oder Riemen damit verbundenes, vertikal verfahrbares Lastaufnahmemittel (8). Das Lastaufnahmemittel (8) weist einen Hilfsrahmen (13) sowie einen Tragrahmen (14) auf. Der Hilfsrahmen (13) ist mit Feststellelementen (16) zum Festsetzen im Ein- und Auslagerungsbereich eines Regalfachs (2) versehen. Der Tragrahmen (14) ist gegenüber dem Hilfsrahmen (13) verschiebbar, so dass er nach dem Festsetzen des Hilfsrahmens (13) in die zum Ein- und Auslagern von Gütern vorgesehene Sollposition verschoben werden kann.

## Beschreibung

Die Erfindung betrifft eine Regallageranlage zur Aufnahme von Gütern nach dem Oberbegriff des Anspruchs 1, ein flurfrei arbeitendes Regalbediengerät für eine Regallageranlage nach dem Oberbegriff des Anspruchs 11 sowie ein Verfahren zum Positionieren eines Lastaufnahmemittels eines flurfrei arbeitenden Regalbediengeräts nach dem Oberbegriff des Anspruchs 15.

Aus der DE-A-102 50 964 ist ein System zum dynamischen Bereitstellen und Kommissionieren, insbesondere von Paletten und anderen Lagereinheiten, bekannt. Dieses System umfasst einen Lagerbereich, der aus einer Vielzahl von Lagerscheiben besteht. Die Lagerscheiben sind in Regalfächer unterteilt, wobei pro Regalfach drei mit Gütern bestückte Lagereinheiten aufgenommen werden können. Zwischen zwei Regalscheiben verläuft jeweils eine Gasse. Am Boden der jeweiligen Gasse sind flurgebundene, fahrerlose Transportfahrzeuge angeordnet, die entlang von entsprechenden Spuren verkehren können. Im Bereich der obersten Regalfächer einer Lagerscheibe sind flurlose Lagerbediengeräte angeordnet, die entlang den Gassen verfahrbar sind. Das jeweilige Lagerbediengerät besteht aus einer Verfahreinheit und einem über Seile damit verbundenen Lastaufnahmemittel, welches vertikal verfahrbar ist. Obwohl ein derartiges System gegenüber flurgebundenen Regalbediengeräten wesentlich Vorteile aufweist, besteht eine grundsätzliche Problematik darin, dass eine sehr aufwendige Regelelektronik zur Bewegungssteuerung der Verfahreinheit vorgesehen werden muss, damit das mittels Seilen aufgehängte Lastaufnahmemittel nicht schwingt oder pendelt. Diese Problematik stellt sich sowohl beim Beschleunigen als insbesondere auch beim Abbremsen der Verfahreinheit. Trotz einer sehr ausgeklügelten Regelelektronik zur Bewegungssteuerung der Verfahreinheit kann ein Pendeln oder Schwingen des Lastaufnahmemittels nie ganz verhindert werden, zumal schon kleine Unebenheiten in der Fahrspur des Lagerbediengeräts und/oder Luftbewegungen dazu führen können, dass das Lastaufnahmemittel zu pendeln beginnt. Dies führt letztlich dazu, dass das Andocken des Lastaufnahmemittels an einem Regalfach relativ lange dauert, da das Lastaufnahmemittel vor dem eigentlichen Andocken zuerst auspendeln und zur Ruhe kommen muss. Andererseits ist ein positionsgenaues Andocken sehr schwierig, da das Lastaufnahmemittel in der Praxis nie vollkommen ruhig ist. Für ein genaues Andocken könnten natürlich Zentrierelemente wie beispielsweise Einlauftrichter vorgesehen werden, was jedoch mit erheblichem technischem und finanziellem Aufwand verbunden ist und in bestimmten Fälle nicht praktikabel ist, da das Anbringen von Zentrierelementen die Statik der Regallageranlage schwächen könnte. Dies ist beispielsweise dann der Fall, wenn zum Befestigen der Zentrierelemente Löcher in den tragenden Elementen der Anlage vorgesehen werden müssen.

Die Erfindung zielt darauf ab, eine Regallageranlage zur Aufnahme von Gütern gemäss dem Oberbegriff des Anspruchs 1 derart weiterzubilden, dass die Zeit zum Ein- und Auslagern der Güter nachhaltig reduziert werden kann, indem das Lastaufnahmemittel des flurlosen Lagerbediengeräts schnell und lagegerecht an Trägerprofilen der Regallageranlage festgelegt werden kann. Insbesondere soll das Lastaufnahmemittel festgesetzt werden können, bevor es vollständig zur Ruhe gekommen ist.

Hierzu wird nach der Erfindung eine Regallageranlage gemäss dem Anspruch 1 bereitgestellt.

Bevorzugte Ausführungsbeispiele der Regallageranlage sind in den abhängigen Ansprüchen 2 bis 10 umschrieben.

Eine weitere Aufgabe der Erfindung besteht darin, ein flurfrei arbeitendes Regalbediengerät für eine Regallageranlage vorzuschlagen, dessen Lastaufnahmemittel sich in besonders vorteilhafter Weise eignet, um schnell im Bereich eines Regalfachs der Regallageranlage angedockt zu werden, und zwar auch dann, wenn das Lastaufnahmemittel noch nicht vollständig zur Ruhe gekommen ist.

Diese Aufgabe wird mit einem gemäss dem Anspruch 11 ausgebildeten Regalbediengerät gelöst.

Bevorzugte Weiterbildungen des Regalbediengeräts sind in den abhängigen Ansprüchen 12 bis 14 umschrieben.

Schliesslich besteht eine weitere Aufgabe der Erfindung darin, ein Verfahren zum Positionieren des Lastaufnahmemittels eines flurfrei arbeitenden Regalbediengeräts in der Gasse einer Regallageranlage vorzuschlagen, welches ein schnelles Andocken und ein genaues Positionieren der zum Ein- und Auslagern der Güter notwendigen Ein-/Auslagervorrichtung in Bezug auf ein Regalfach oder einen Lagerplatz der Regallageranlage ermöglicht.

Zur Lösung dieser Aufgabe wird ein Verfahren gemäss dem Anspruch 15 vorgeschlagen.

Bevorzugte Weiterbildungen des Verfahrens sind in den abhängigen Ansprüchen 16 bis 18 umschrieben.

Nachfolgend wird ein bevorzugtes Ausführungsbeispiel der Erfindung anhand von Zeichnungen näher erläutert. In diesen Zeichnungen zeigt:
- Fig. 1: einen Querschnitt durch eine schematisch dargestellte Regallageranlage;
- Fig. 2: ein flurfrei arbeitendes Regalbediengerät in einer Frontansicht;
- Fig. 2a: eine erste Ansicht eines Details des Regalbediengeräts gemäss Fig. 2;
- Fig. 2b: eine zweite Ansicht eines Details des Regalbediengeräts gemäss Fig. 2;
- Fig. 2c: eine dritte Ansicht eines Details des Regalbediengeräts gemäss Fig. 2;
- Fig. 3: eine Draufsicht auf das Lastaufnahmemittel des Regalbediengeräts gemäss Fig. 2, und
- Fig. 3a: eine Detailansicht eines an der Regallageranlage angeordneten Reflektors;
- Fig. 4: ein alternatives Ausführungsbeispiel eines Lastaufnahmemittels.

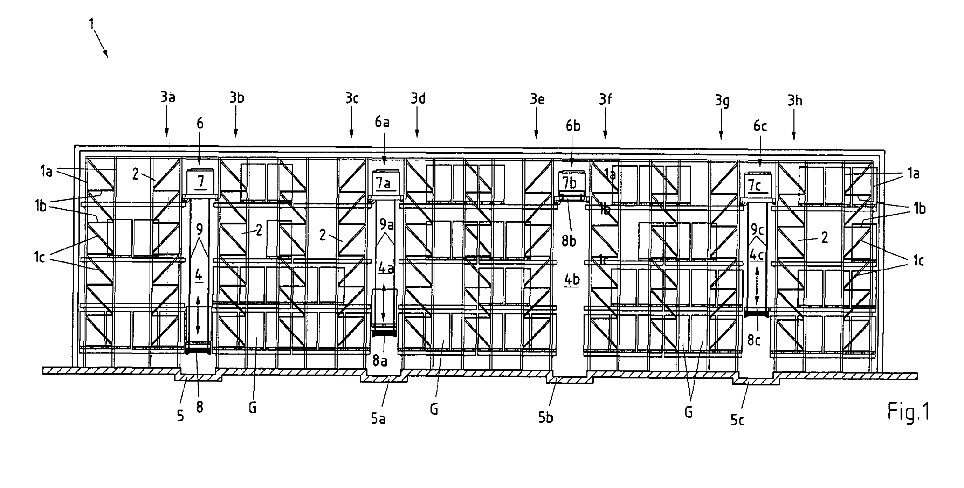

Die Fig. 1 zeigt einen Querschnitt durch eine schematisch dargestellte Regallageranlage 1. Die Tragstruktur der Regallageranlage 1 besteht aus einer Vielzahl von Trägerprofilen 1 a, 1 b, 1 c, welche vertikal, horizontal und auch schräg verlaufen. Die Regallageranlage 1 umfasst eine Vielzahl von Regalfächern 2, die in vertikal verlaufenden Regalreihen 3a-3h angeordnet sind. Ein einzelnes Regalfach 2 kann ggf. mehrere horizontal nebeneinander angeordnete Lagerplätze umfassen, wobei der jeweilige Lagerplatz in der Form eines Lagerkanals ausgebildet sein kann, der mehrere hintereinander angeordnete Stellplätze umfasst. Seitlich wird das jeweilige Regalfach 2 durch vertikal verlaufende Streben 1 a begrenzt. Jedenfalls dient das jeweilige Regalfach 2 der Aufnahme von Gütern G, welche vorzugsweise auf Paletten aufgenommen sind. Zwischen zwei benachbarten Regalreihen 3a, 3b, 3c, 3d, 3e, 3f, 3g, 3h verläuft jeweils eine Gasse 4, 4a; 4b; 4c, welche sich in vertikaler Richtung über sämtliche Regalfächer 2 hin erstreckt. Pro Gasse 4, 4a; 4b; 4c ist zumindest ein in Längsrichtung der Gasse 4, 4a; 4b; 4c verfahrbares Regalbediengerät 6, 6a, 6b, 6c angeordnet, welches hier nur schematisch angedeutet ist.

Das jeweilige Regalbediengerät 6, 6a, 6b, 6c ist als flurfrei arbeitendes Gerät ausgebildet, das oberhalb des Bodens 5, 5a, 5b, 5c der jeweiligen Gasse 6, 6a; 6b; 6c, vorzugsweise im Bereich der obersten oder zweitobersten Regalreihe, verfahrbar abgestützt ist. Pro Regalreihe muss zumindest ein Regalbediengerät 6, 6a, 6b, 6c so weit oben angeordnet sein, dass es Paletten aus der obersten Regalreihe entnehmen kann. Das jeweilige Regalbediengerät 6, 6a, 6b, 6c besteht aus einer elektromotorisch angetriebenen Verfahreinheit in der Form einer Laufkatze 7, 7a, 7b, 7c an der ein Lastaufnahmemittel 8, 8a, 8b, 8c mittels Seilen 9, 9a, 9b, 9c oder dergleichen abgestützt ist. Obwohl aus dieser Darstellung nur zwei Seile pro Regalbediengerät 6, 6a, 6c ersichtlich sind, ist das jeweilige Lastaufnahmemittel 8, 8a, 8b, 8c mittels vier Seilen mit der Laufkatze 7, 7a, 7b, 7c verbunden. Es versteht sich, dass anstelle von Seilen auch andersartige Tragmittel wie beispielsweise Riemen vorgesehen werden können. Das Lastaufnahmemittel 8, 8a, 8b, 8c ist, wie durch Doppelpfeile angedeutet, in vertikaler Richtung entlang der Regalfächer 2 verfahrbar. Das Lastaufnahmemittel 8, 8a, 8b, 8c ist vorzugsweise als Plattform ausgebildet, auf der eine Ein-/Auslagervorrichtung in Form einer Teleskopgabel mit Hub oder eines Kanalfahrzeugs angeordnet ist, mittels welchem die Güter G aus einem Regalfach entnommen bzw. darin eingelagert werden können. Um Güter G in ein Regalfach ein- bzw. auslagern zu können, muss die jeweilige Ein-/Auslagervorrichtung positionsgenau vor dem jeweiligen Regalfach bzw. dem jeweiligen Lagerplatz platziert werden. Die diesbezüglich notwendigen Mittel und Elemente werden nachfolgend noch näher erläutert.

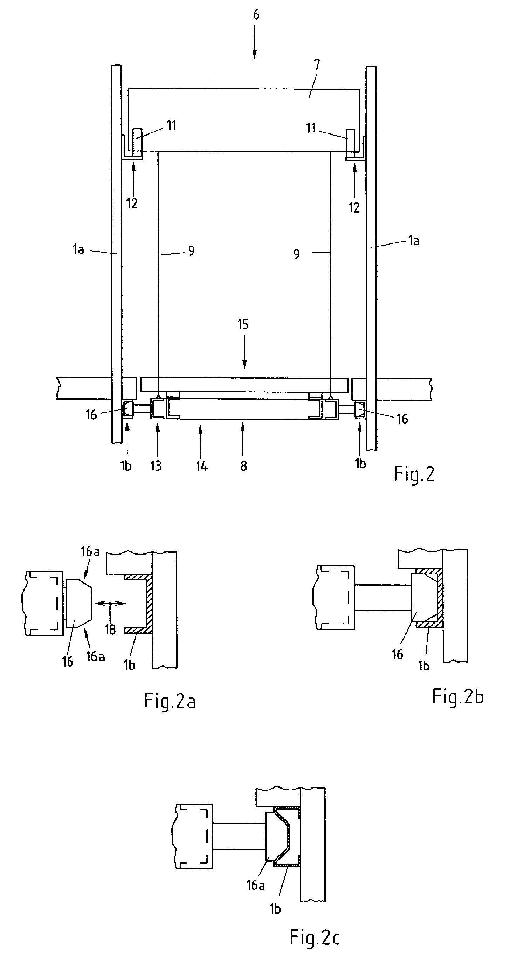

In der Fig. 2 ist ein Regalbediengerät 6 in einer Frontansicht schematisch dargestellt. Zudem sind Teile der Tragstruktur der Regallageranlage, namentlich zwei vertikal verlaufende Trägerprofile 1 a sowie zwei horizontal verlaufende Trägerprofile 1 b ersichtlich. Das Regalbediengerät 6 besteht im wesentlichen aus der elektromotorisch angetriebenen Laufkatze 7 sowie dem mittels Seilen 9 daran aufgehängten Lastaufnahmemittel 8. Die Laufkatze 7 ist mittels Rollen 11 1 auf horizontal verlaufenden Schienen 12 verfahrbar. Die Schienen 12 sind an den vertikal verlaufenden Trägerprofilen 1 a befestigt. Das Lastaufnahmemittel 8 besteht aus einem äusseren Hilfsrahmen 13 sowie einem inneren Tragrahmen 14, der auf der Oberseite mit der Ein-/Auslagervorrichtung 15 zum Einlagern von Gütern in ein Regalfach bzw. zum Auslagern von Gütern aus einem Regalfach versehen ist. Der Hilfsrahmen 13 ist mit Feststellelementen 16 versehen, welche dem Festsetzen an den horizontal verlaufenden Trägerprofilen 1 b dienen. Die horizontal verlaufenden Trägerprofile 1 b sind im vorliegenden Beispiel U-förmig ausgebildet, wobei natürlich auch andere Ausführungsformen möglich sind, welche ein Festsetzen des Hilfsrahmens erlauben. Die Feststellelemente 16 sind quer zur Fahrtrichtung der Laufkatze 7 verschiebbar an dem Hilfsrahmen 13 angeordnet. Die Feststellelemente 16 sind mit einer konisch zulaufenden Vorderseite versehen, welche in vertikaler Richtung eine Zentrierfunktion beim Einfahren in das jeweilige Trägerprofil 1 b übernehmen. Der Tragrahmen 14 ist in horizontaler Richtung entlang der Gasse verschiebbar am Hilfsrahmen 13 abgestützt. Ggf. könnte natürlich auch eine vertikale Verschiebbarkeit des Tragrahmens 14 gegenüber dem Hilfsrahmen 13 vorgesehen werden. Üblicherweise dürfte es jedoch genügen, wenn der Tragrahmen 14 gegenüber dem Hilfsrahmen 13 horizontal verschiebbar ist, da der Hilfsrahmen 13 beim Festsetzen an dem jeweiligen Trägerprofil 1 b in vertikaler Richtung genügend genau positioniert wird.

Die Fig. 2a zeigt ein Feststellelement 16 des Lastaufnahmemittels in vergrösserter Darstellung. Wie ersichtlich, ist das Feststellelement 16 auf der Vorderseite mit konisch zulaufenden Zentrierflächen 16a, 16b versehen, welche das Lastaufnahmemittel beim Festsetzen des Hilfsrahmens an der Regallageranlage in vertikaler Richtung positionieren. Die Verschieberichtung des Feststellelements 16 ist durch einen Doppelpfeil 18 angedeutet. In der Fig. 2b ist das Feststellelement 16 im festgesetzten Zustand ersichtlich, in welchem es in das Trägerprofil 1 b eingefahren und darin festgesetzt -verspannt- ist.

Die Fig. 2c zeigt eine alternative Ausführungsform eines horizontal verlaufenden Trägerprofils 1 b, wobei das Feststellelement 16a auch in diesem Fall derart auf das Trägerprofil 1 b abgestimmt ist, dass es das Lastaufnahmemittel beim Einführen in das Trägerprofil 1 b in vertikaler Richtung positioniert.

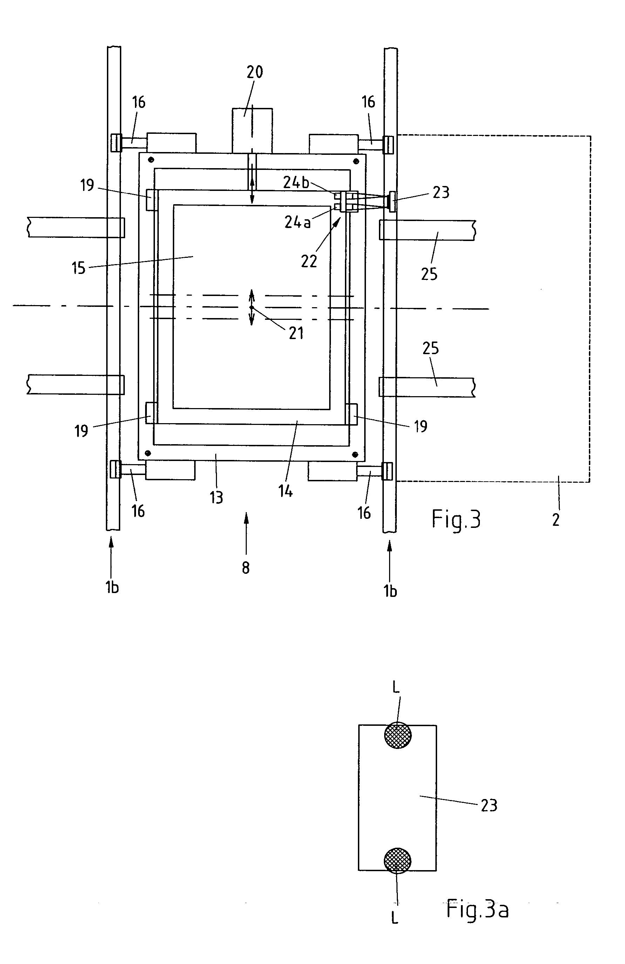

Fig. 3 zeigt eine Draufsicht auf das Lastaufnahmemittel 8. Aus dieser Darstellung sind insbesondere der Hilfsrahmen 13, der Tragrahmen 14, die Ein-/Auslagervorrichtung 15 sowie die Feststellelemente 16 ersichtlich. Ein zur Aufnahme von Gütern vorgesehenes Regalfach 2 ist mittels unterbrochenen Linien schematisch angedeutet. Im vorliegenden Fall weist das Regalfach 2 einen einzelnen Lagerplatz auf. Es ist jedoch durchaus üblich, dass ein Regalfach zwei oder drei horizontal nebeneinander angeordnete Lagerplätze umfasst. Der Hilfsrahmen 13 ist auf jeder Seite mit zwei Feststellelementen 16 versehen, mittels welchen er an dem jeweiligen Trägerprofil 1 b festgesetzt wird. Die Feststellelemente 16 können beispielsweise elektromotorisch, hydraulisch oder pneumatisch betätigt werden, wobei deren Antrieb nicht näher dargestellt ist. Der Tragrahmen 14 ist mittels schematisch angedeuteten Gleitlagern 19 am Hilfsrahmen 13 abgestützt. Der Tragrahmen 14 kann beispielsweise auch über Gleitschienen, Walzen, Rollen oder dergleichen am Hilfsrahmen 13 abgestützt sein. Zum Verschieben des Tragrahmens 14 gegenüber dem Hilfsrahmen 13 ist ein Spindelantrieb 20 vorgesehen, wobei natürlich auch hier grundsätzlich andere Antriebe in Frage kommen. Im weiteren ist eine Lichtschrankenanordnung 22 ersichtlich, die aus einem ortsfest an der Tragstruktur -horizontal verlaufendes Trägerprofil 1 b- angeordneten Referenz in Form eines Reflektors 23 sowie zwei am Lastaufnahmemittel 8 -Tragrahmen 14-angeordneten Sender- und Empfängereinheiten 24a, 24b besteht. Sowohl die Lichtschrankenanordnung 22 wie auch der Spindelantrieb 20 sind mit einer nicht näher dargestellten Steuer- und Auswerteelektronik verbunden. Die Lichtschrankenanordnung 22 dient dem genauen Positionieren des Tragrahmens 14 gegenüber dem jeweiligen Regalfach 2 bzw. dem jeweiligen Lagerplatz. Die Lichtschrankenanordnung 22 ist so ausgelegt, dass das Licht beider Sender von dem Reflektor 23 reflektiert und vom entsprechenden Empfänger empfangen werden muss, damit auf ein korrektes Positionieren des Tragrahmens 14 erkannt wird. Korrektes Positionieren bedeutet in diesem Fall, dass der Tragrahmen 14 in Bezug auf das jeweilige Regalfach 2 lagegerecht positioniert sein muss, so dass dessen Ein-/Auslagervorrichtung 15 in das Regalfach 2 hinein- und auch wieder hinaus bewegt werden kann, um Güter ein- bzw. auszulagern. Die seitlich in das jeweilige Regalfach 2 führenden Schienen 25 können ggf. genutzt werden, um die Ein-/Auslagervorrichtung 15 in das Regalfach ein- bzw. auszufahren.

In der Figur 3 ist der Tragrahmen 14 in einer zentralen Position dargestellt, aus der er entlang der jeweiligen Gasse horizontal in zwei Richtungen, beispielsweise um jeweils zehn Zentimeter, verschoben werden kann, wie dies durch den Doppelpfeil 21 angedeutet ist. Eine andere Möglichkeit besteht darin, den Tragrahmen 14 jeweils in die eine Endposition zu verfahren, aus der er dann in eine Richtung um das Doppelte des vorgängig genannten Betrags, also um zwanzig Zentimeter verschoben werden kann. Je nach Ausführung und Einsatzzweck sind beide Varianten möglich. Jedenfalls wird der Tragrahmen 14 vor dem Festsetzen an dem jeweiligen Trägerprofil 1 b gegenüber dem Hilfsrahmen 13 in die vorgesehene Sollposition verfahren.

Die Fig. 3a zeigt in vergrösserter Darstellung eine Draufsicht auf die Reflektorfläche des Reflektors 23 gemäss Fig. 3. Durch die beiden schraffierten Kreise L soll schematisch das von den beiden Sendern der Sender- und Empfängereinheiten 24a, 24b in Richtung des Reflektors emittierte Licht angedeutet werden. Die Breite des Reflektors 23 ist derart auf die beiden Licht emittierenden Sender abgestimmt, dass nur dann das Licht beider Sender reflektiert wird, wenn sich der Tragrahmen 14 in einer genau festgelegten Position, nämlich der Sollposition, befindet. Sobald der Tragrahmen 14 um einige Millimeter verschoben ist, wird nur noch das Licht von einem Sender reflektiert, was von der zugehörigen Auswerteeinheit als nicht korrekt positioniert interpretiert wird.

Die Wirkungsweise der Regallageranlage 1 bzw. des Regalbediengeräts 6 stellt sich wie folgt dar: Um Güter in das gewünschte Regalfach 2 einlagern bzw. aus dem gewünschten Regalfach 2 auslagern zu können, wird das Lastaufnahmemittel 8 des Regalbediengeräts 6 in den Ein- und Auslagerungsbereich des entsprechenden Regalfachs 2 bewegt. Dazu wird die Laufkatze 7 entlang der Gasse soweit verfahren, bis sie sich vertikal oberhalb des entsprechenden Regalfachs befindet. Während des Bewegens der Laufkatze 7 wird das Lastaufnahmemittel 8 auf die gewünschte Höhe angehoben bzw. abgesenkt. Ggf. wird während des Verfahrens der Laufkatze 7 auch der Tragrahmen 14 gegenüber dem Hilfsrahmen 13 in die vorgesehene Ausgangsposition verschoben. Beim Annähern an die vorgesehene Sollposition wird die Laufkatze 7 kontrolliert abgebremst, wobei sie einige Zentimeter vor der eigentlichen Sollposition angehalten wird.

Sobald die Laufkatze 7 zum Stillstand gekommen ist, wird der Hilfsrahmen 13 mittels den Feststellelementen 16 festgesetzt. Beim Einfahren der Feststellelemente 16 in das Trägerprofil 1 b wird das gesamte Lastaufnahmemittel 8 in vertikaler Richtung positioniert. Nach dem Festsetzen des Hilfsrahmens 13 wird der Tragrahmen 14 mittels des Spindelantriebs 20 horizontal in Richtung der Sollposition verschoben. Als Sollposition wird diejenige Position bezeichnet, in der der Tragrahmen 14 in Bezug auf das jeweilige Regalfach 2 bzw. den jeweiligen Lagerplatz lagegerecht positioniert ist, so dass dessen Ein-/Auslagervorrichtung 15 in das Regalfach 2 hinein- und auch wieder hinaus bewegt werden kann, um Güter ein- bzw. auszulagern.

Die Richtung, in der der Tragrahmen 14 nach dem Festsetzen des Hilfsrahmens 13 verschoben werden muss ist im Normalfall bekannt, da die Laufkatze 7, und damit natürlich auch das Lastaufnahmemittel 8, vor der eigentlichen Sollposition angehalten wurde. Jedenfalls wird der Tragrahmen 14 soweit verschoben, bis das Licht beider Sender vom Reflektor 23 auf die zugehörigen Empfängereinheit reflektiert wird. Sobald dies der Fall ist, ist der Tragrahmen 14 korrekt positioniert und die Ein-/Auslagervorrichtung 15 kann in das Regalfach 2 einfahren um Güter darin einzulagern bzw. Güter daraus zu entnehmen. Nach dem Ein- bzw. Auslagern der Güter fährt die Ein-/Auslagervorrichtung 15 wieder aus dem Regalfach 2 hinaus und bewegt sich zurück auf das Lastaufnahmemittel 8 bzw. den Tragrahmen 14. Während des nachfolgenden Verfahrens der Laufkatze 7 wird der Tragrahmen 14 wieder in seine Ausgangsposition verschoben.

Vorzugsweise wird jedoch die Laufkatze 7 zusammen mit dem Lastaufnahmemittel 8, unabhängig von der Bewegungsrichtung, in Bezug auf die Sollposition immer auf die gleiche Seite versetzt vor dem jeweiligen Regalfach 2 angehalten. Dies hat den Vorteil, dass der Tragrahmen 14 in Bezug auf den Hilfsrahmen 13 ebenfalls immer in der gleichen Richtung versetzt sein kann, so dass er nach dem Festsetzen des Hilfsrahmens 13 immer in die gleiche Richtung bewegt werden muss. Grundsätzlich wird mit dem Hilfsrahmen 13 eine horizontale Grobpositionierung des Tragrahmens 14 vorgenommen, während durch das horizontale Verschieben des Tragrahmens 14 gegenüber dem Hilfsrahmen 13 anschliessend die horizontale Feinpositionierung erfolgt. Die vertikale Positionierung des Tragrahmens 14 erfolgt direkt beim Festsetzen des Hilfsrahmens 13, wenn dessen Feststellelemente 16 in das jeweilige Trägerprofil 1 b einfahren.

Nach erfolgter Ein- bzw. Auslagerung können die Feststellelemente 16 gelöst und das Lastaufnahmemittel 8 an die für den nachfolgenden Vorgang gewünschte Position bewegt werden. Während des Verfahrens der Laufkatze 7 wird der Tragrahmen 14 in Bezug auf den Hilfsrahmen 13 wieder in seine Ausgangsstellung verfahren.

Die Vorteile einer derart ausgebildeten Regallageranlage 1 bzw. eines derart ausgebildeten Regalbediengeräts 6 bestehen darin, dass das Auspendeln des Lastaufnahmemittels 8 nicht mehr abgewartet werden muss, bis dieses vor einem Regalfach angedockt werden kann. Dies geht mit einer grossen Zeitersparnis einher. Zudem kann das Andocken wesentlich präziser als bisher erfolgen. Jedenfalls kann auf diese Weise das Lastaufnahmemittel 8, dank des Hilfsrahmens 13, sehr schnell und einfach an der Tragstruktur angedockt und dabei gleichzeitig vertikal feinpositioniert und horizontal vorpositioniert werden. Das horizontale Feinpositionieren geschieht danach durch horizontales Verschieben des Tragrahmens 14 gegenüber dem Hilfsrahmen 13. Es sei angemerkt, dass die Begriffe Hilfsrahmen sowie Tragrahmen jeweils stellvertretend für jegliche Art von Vorrichtungen, Anordnungen oder Gebilden stehen, welche den bestimmungsgemässen Zweck erfüllen.

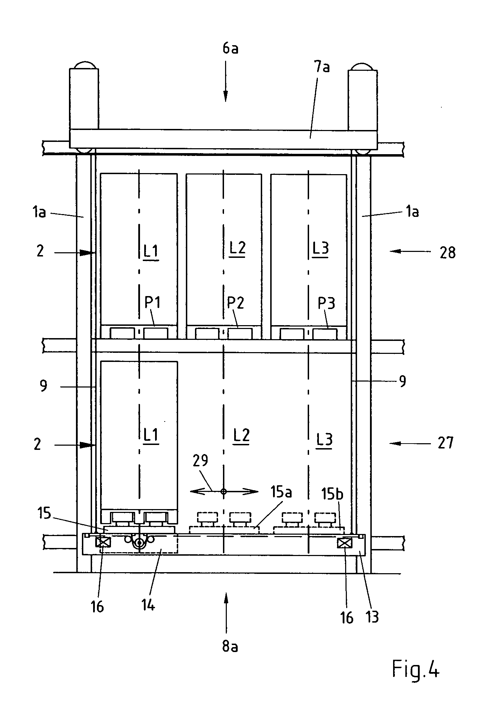

Fig. 4 zeigt zwei Regalfächer 2 in einer Ansicht aus der Gasse zusammen mit einem alternativen Ausführungsbeispiel eines Regalbediengeräts 6a in einer Ansicht aus der Gasse. Konkret sind zwei vertikal übereinander angeordnete Regalfächer 2 ersichtlich, die in zwei Lagerebenen 27, 28 angeordnet sind. Jedes Regalfach 2 umfasst jeweils drei nebeneinander angeordnete Lagerplätze L1, L2, L3. Die Lagerplätze L1, L2, L3 können sich zudem in die Tiefe erstrecken, indem beispielsweise pro Lagerplatz zwei Stellplätze hintereinander angeordnet sind. Das jeweilige Regalfach 2 wird seitlich von den vertikal verlaufenden Trägerprofilen 1 a begrenzt. Zwischen den beiden dargestellten Trägerprofilen 1 a sind pro Lagerebene 27, 28 somit drei zu einem Regalfach 2 zusammengefasste Lagerplätze L1, L2, L3 angeordnet.

In der oberen Lagerebene 28 sind drei mit Gütern bestückte Paletten P1, P2, P3 ersichtlich. Das Regalbediengerät 6a umfasst wiederum eine elektromotorisch angetriebene Laufkatze 7a sowie ein mittels Seilen 9 daran aufgehängtes Lastaufnahmemittel 8a. Ebenso weist das Lastaufnahmemittel 8a einen äusseren Hilfsrahmen 13 sowie einen inneren Tragrahmen 14 auf, der auf der Oberseite mit der Ein-/Auslagervorrichtung 15 zum Ein- und Auslagern von Gütern in ein Regalfach 2 bzw. aus einem Regalfach 2 versehen ist, wobei auch in diesem Fall der Hilfsrahmen 13 Feststellelemente 16 aufweist, welche dem Festsetzen an einem horizontal verlaufenden Trägerprofil 1 b dienen. Der grundsätzliche Unterschied zu dem vorgängig beschriebenen Ausführungsbeispiel besteht darin, dass sich der Hilfsrahmen 13 in horizontaler Richtung über mehrere Lagerplätze L1, L2, L3 hinweg erstreckt. Der Tragrahmen 14 selber weist in horizontaler Richtung in etwa die gleiche Grösse auf, wie beim vorgängigen Ausführungsbeispiel, allerdings besitzt er einen wesentlich grösseren Verschiebebereich, indem er innerhalb des Hilfsrahmens 13 soweit verfahrbar ist, dass er nach dem Festsetzen des Hilfsrahmens 13 sämtliche drei Lagerplätze L1, L2, L3 eines Regalfachs 2 bedienen kann, wie dies durch den Doppelpfeil 29 angedeutet ist. Die weiteren Positionen 15a, 15b, die die Ein-/Auslagervorrichtung 15 zum Bedienen des jeweiligen Lagerplatzes L2, L3 einnehmen muss, sind mittels unterbrochenen Linien angedeutet.

Im weiteren sind zwei vertikal verlaufende, einen Teil der Tragstruktur der Regallageranlage bildende Trägerprofile 1 a ersichtlich, welche das jeweilige Regalfach 2 einer Lagerebene L1, L2 seitlich begrenzen. Der Vorteil eines derart ausgebildeten Regalbediengeräts 6a besteht u.a. auch darin, dass die Feststellelemente 16 den Hilfsrahmen 13 im Bereich der vertikal verlaufenden Trägerprofile 1 a abstützen, wodurch dieser wesentlich belastbarer ist. Dadurch eignet sich ein solches Lastaufnahmemittel 8a insbesondere auch zur Bedienung von Regallageranlagen, deren Regalfächer 2 eine doppelte Lagertiefe besitzen, indem beispielsweise zwei Paletten hintereinander eingelagert werden können. Soll nämlich die hintere der beiden Paletten ein- bzw. ausgelagert werden, so werden durch die Ein-/Auslagervorrichtung 15 sehr hohe Kraftmomente auf das Lastaufnahmemittel 8a übertragen. Ist die Ein-/Auslagervorrichtung 15 als Teleskopgabel ausgebildet, so muss sie ca. 2.6 Meter seitlich ausgefahren werden, damit der hintere Lagerplatz bedient werden kann. Da solche Hubvorrichtungen 15 zur Aufnahme von Lasten von bis zu 1000 Kilogramm ausgebildet sind bzw. sein müssen, werden durch die Ein-/Auslagervorrichtung 15 sehr hohe Drehmomente - Kippkräfte- in das an der Tragstruktur angedockte Lastaufnahmemittel 8a eingeleitet. Diese Kräfte werden über die Feststellelemente 16 des Hilfsrahmens auf die Tragstruktur der Anlage übertragen. Indem nun die Feststellelemente 16 im Bereich der vertikal verlaufenden Trägerprofile 1 a angreifen, wird die Kraft relativ direkt in die vertikal verlaufenden Trägerprofile 1 a eingeleitet und die horizontal verlaufenden Trägerprofile entlastet. Vorzugsweise wird in diesem Fall entweder pro Regalfach 2 oder pro Lagerplatz L1, L2, L3 eine ortsfeste Referenz vorgesehen, welche dem Positionieren des Tragrahmens 14 dient. Für den Fall, dass pro Regalfach 2 nur eine Referenz vorgesehen wird, kann zur Feinpositionierung des Tragrahmens 14 beispielsweise ein mit dem Spindelantrieb gekoppelter Drehgeber vorgesehen werden, mittels welchem die relative Position des Tragrahmens 14 in Bezug auf den Hilfsrahmen 13 erkennbar bzw. erfassbar ist. Die grundsätzliche Positionierung und das Festsetzen des Hilfsrahmens 13 erfolgt in der zuvor beschriebenen Weise, so dass an dieser Stelle nicht näher darauf eingegangen zu werden braucht.

Obwohl im Ausführungsbeispiel gemäss Fig. 4 pro Regalfach 2 drei bzw. sechs Lagerplätze L1, L2, L3 vorgesehen sind, können natürlich Regalfächer 2 mit einer davon abeichenden Anzahl von Lagerplätzen vorgesehen werden. Sind pro Regalfach beispielsweise zwei horizontal nebeneinander angeordnete Lagerplätze vorgesehen, und soll das Regalbediengerät wiederum in der Lage sein, zwei hintereinander angeordnete Lagerplätze zu bedienen und/oder hohe Lasten aufzunehmen, so wird die Länge des Hilfsrahmens 13 entsprechend angepasst, so dass dieser wiederum im Bereich der beiden vertikal verlaufenden und das jeweilige Regalfach seitlich begrenzenden Trägerprofile mittels den Feststellelementen festgesetzt wird.

## Patentansprüche

1. Regallageranlage (1) mit einer Vielzahl von Regalfächern (2) zur Aufnahme von Gütern (G), wobei die Regalfächer (2) in Regalreihen (3a-3h) angeordnet sind und zwischen zwei benachbarten Regalreihen (3a, 3b; 3c, 3d; 3e, 3f; 3g, 3h) jeweils eine Gasse (4, 4a; 4b; 4c) verläuft, und wobei pro Gasse (4, 4a; 4b; 4c) zumindest ein in Längsrichtung der Gasse (4, 4a; 4b; 4c) verfahrbares Regalbediengerät (6, 6a, 6b, 6c) angeordnet ist, welches als flurfrei arbeitendes Gerät ausgebildet ist, indem es oberhalb des Bodens (5, 5a, 5b, 5c) der jeweiligen Gasse (4, 4a; 4b; 4c) verfahrbar abgestützt ist, und wobei das jeweilige Regalbediengerät (6, 6a, 6b, 6c) eine Verfahreinheit (7, 7a, 7b, 7c) und ein über Seile (9, 9a, 9c) oder Riemen damit verbundenes, vertikal verfahrbares Lastaufnahmemittel (8, 8a, 8b, 8c) aufweist, und wobei die Tragstruktur der Regallageranlage (1) eine Vielzahl von Trägerprofilen (1a, 1 b, 1 c) aufweist, **dadurch gekennzeichnet, dass** das jeweilige Lastaufnahmemittel (8) einen Hilfsrahmen (13) sowie einen Tragrahmen (14) aufweist, wobei der Hilfsrahmen (13) mit Feststellelementen (16) zum Festsetzen des Hilfsrahmens (13) an Trägerprofilen (1b) versehen ist, und wobei Mittel (20) zum Verschieben des Tragrahmens (14) gegenüber dem Hilfsrahmen (13) vorgesehen sind.

2. Regallageranlage (1) nach Anspruch 1, **dadurch gekennzeichnet, dass** die Feststellelemente (16) gleichzeitig als Zentrierelemente wirken und derart ausgebildet sind, dass sie den Hilfsrahmen (13) beim Festsetzen in vertikaler Richtung positionieren.

3. Regallageranlage (1) nach Anspruch 2, wobei die Regallageranlage (1) horizontal verlaufende Trägerprofile (1 b) aufweist, welche einen Teil der Tragstruktur der Regallageranlage (1) bilden, **dadurch gekennzeichnet, dass** die Feststellelemente (16) zum Festsetzen und vertikalen Positionieren des Hilfsrahmens (13) an den horizontal verlaufenden Trägerprofilen (1 b) ausgebildet sind.

4. Regallageranlage (1) nach einem der vorhergehenden Ansprüche, **dadurch gekennzeichnet, dass** der Tragrahmen (14) horizontal verschiebbar am Hilfsrahmen (13) abgestützt ist, und dass Mittel (20) zum horizontalen Verschieben des Tragrahmens (14) gegenüber dem Hilfsrahmen (13) vorgesehen sind.

5. Regallageranlage (1) nach einem der vorhergehenden Ansprüche, **dadurch gekennzeichnet, dass** die Regallageranlage (1) ortsfeste Positioniermittel oder Referenzen (23) aufweist, welche ein Feinpositionieren des Tragrahmens (14) nach dem Festsetzen des Hilfsrahmens (13) ermöglichen.

6. Regallageranlage (1) nach Anspruch 5, **dadurch gekennzeichnet, dass** dem jeweiligen Regalfach (2) zumindest eine ortsfeste Referenz (23) zugeordnet ist, deren Position mittels zumindest eines am Lastaufnahmemittel (8) angeordneten Sensors (24a, 24b) erfassbar, erkennbar oder abtastbar ist.

7. Regallageranlage (1) nach Anspruch 6, **dadurch gekennzeichnet, dass** am Lastaufnahmemittel (8) zumindest ein Sender und zumindest ein Empfänger angeordnet ist, und die ortsfeste Referenz aus zumindest einem Reflektor (23) besteht, der das vom Sender emittierte Signal in Richtung des Empfängers zu reflektieren in der Lage ist.

8. Regallageranlage (1) nach einem der vorhergehenden Ansprüche, **dadurch gekennzeichnet, dass** das Lastaufnahmemittel (8) mit einem elektromotorischen Antrieb (20) zum Verschieben des Tragrahmens (14) gegenüber dem Hilfsrahmen (13) versehen ist.

9. Regallageranlage (1) nach einem der vorhergehenden Ansprüche, wobei die Regalfächer (2) seitlich durch je ein vertikal verlaufendes Trägerprofil (1 a) begrenzt werden, **dadurch gekennzeichnet, dass** der Hilfsrahmen (13) derart ausgebildet ist, dass dessen Feststellelemente im Bereich der das jeweilige Regalfach (2) seitlich begrenzenden Trägerprofile (1a) festsetzbar sind.

10. Regallageranlage (1) nach einem der vorhergehenden Ansprüche, wobei die Regalfächer (2) zumindest je zwei horizontal nebeneinander angeordnete Lagerplätze (L1, L2, L3) umfassen, **dadurch gekennzeichnet, dass** sich der Hilfsrahmen (13) zumindest über die Breite eines Regalfachs (2) erstreckt, und der Tragrahmen (14) entlang der Lagerplätze (L1, L2, L3) eines Regalfachs (2) verfahrbar ist.

11. Flurfrei arbeitendes Regalbediengerät (6) für eine Regallageranlage, die mit einer Vielzahl von in Regalreihen (3a-3h) angeordneten Regalfächern (2) versehen ist, wobei das Regalbediengerät (6) eine Verfahreinheit (7) und ein über Seile (9) oder Riemen damit verbundenes, vertikal verfahrbares Lastaufnahmemittel (8) aufweist, **dadurch gekennzeichnet, dass** das Lastaufnahmemittel (8) einen Hilfsrahmen (13) sowie einen Tragrahmen (14) aufweist, wobei der Hilfsrahmen (13) mit Feststellelementen (16) zum Festsetzen an der Regallageranlage (1) versehen ist, und wobei Mittel (20) zum Verschieben des Tragrahmens (14) gegenüber dem Hilfsrahmen (13) vorgesehen sind.

12. Regalbediengerät (6) nach Anspruch 11, **dadurch gekennzeichnet, dass** die Feststellelemente (16) Zentrierflächen (16a, 16b) aufweisen, mittels welchen der Hilfsrahmen (13) beim Festsetzen in vertikaler Richtung positionierbar ist, und wobei die Mittel zum Verschieben des Tragrahmens (14) gegenüber dem Hilfsrahmen (13) einen Antrieb (20) zum horizontalen Verschieben des Tragrahmens (14) gegenüber dem Hilfsrahmen (13) umfassen.

13. Regalbediengerät (6) nach Anspruch 11 oder 12, **dadurch gekennzeichnet, dass** am Lastaufnahmemittel (8) zumindest ein Sensor (24a, 24b) zum Erfassen der horizontalen Position des Lastaufnahmemittels (8) angeordnet ist.

14. Regalbediengerät (6) nach Anspruch 13, **dadurch gekennzeichnet, dass** der zumindest eine Sensor (24a, 24b) am Tragrahmen (14) angeordnet ist.

15. Verfahren zum Positionieren eines Lastaufnahmemittels (8) eines flurfrei arbeitenden Regalbediengeräts (6) in der Gasse (4) einer Regallageranlage (1), wobei das Lastaufnahmemittel (8) über Seile (9) oder Riemen mit einer Verfahreinheit (7) verbunden ist, und die Regallageranlage (1) mit einer Vielzahl von Regalfächern (2) versehen ist, die in Regalreihen angeordnet sind, und wobei das Lastaufnahmemittel (8) einen Tragrahmen (14) sowie einen Hilfsrahmen (13) aufweist, welch letzterer mit Feststellelementen (16) zum Festsetzen im Ein- und Auslagerungsbereich eines Regalfachs (2) versehen ist, und wobei Mittel (20) zum Verschieben des Tragrahmens (14) gegenüber dem Hilfsrahmen (13) vorgesehen sind, **dadurch gekennzeichnet, dass** das Lastaufnahmemittel (8) zunächst in eine zumindest annähernd der Soll-Position entsprechende Position gebracht und der Hilfsrahmen (13) in dieser Position an Trägerprofilen (1b) festgesetzt wird, und dass der Tragrahmen (14) danach gegenüber dem Hilfsrahmen (13) verschoben und in die zum Ein- und Auslagern von Gütern aus einem Regalfach (2) vorgesehene Sollposition verschoben wird.

16. Verfahren nach Anspruch 15, **dadurch gekennzeichnet, dass** der Hilfsrahmen (13), unabhängig von der horizontalen Bewegungsrichtung der Verfahreinheit (7), in Bezug auf die zum Ein- und Auslagern von Gütern vorgesehene Sollposition immer auf die gleiche Seite versetzt zu einem Regalfach (2) an den Tragprofilen (1b) festgesetzt wird.

17. Verfahren nach Anspruch 15 oder 16, **dadurch gekennzeichnet, dass** der Hilfsrahmen (13) beim Festsetzen in vertikaler Richtung positioniert wird.

18. Verfahren nach einem der Ansprüche 15 bis 17, **dadurch gekennzeichnet, dass** der Tragrahmen (14) gegenüber dem Hilfsrahmen (13) während des Bewegens des Lastaufnahmemittels (8) in seine Ausgangsposition verschoben wird, aus der er gegenüber dem Hilfsrahmen (13) in eine Richtung maximal oder in beide Richtung in etwa um den gleichen Betrag verschiebbar ist.
